(19) Europäisches Patentamt
European Patent Office
Office européen des brevets

(11) **EP 3 497 509 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(21) Anmeldenummer: **17734985.9**

(22) Anmeldetag: **20.06.2017**

(51) Internationale Patentklassifikation (IPC):
*G02C 13/00* *(2006.01)*

(52) Gemeinsame Patentklassifikation (CPC):
**G02C 13/005**

(86) Internationale Anmeldenummer:
**PCT/EP2017/000718**

(87) Internationale Veröffentlichungsnummer:
**WO 2018/028808 (15.02.2018 Gazette 2018/07)**

(54) **VERFAHREN UND VORRICHTUNG ZUR ÜBERPRÜFUNG DER ZENTRIERUNG ZUMINDEST EINES BRILLENGLASES**

METHOD AND DEVICE FOR ASSESSING THE CENTERING OF AT LEAST ONE SPECTACLE LENS

PROCÉDÉ ET DISPOTIF POUR CONTROLER LE CENTRAGE D'AU MOINS UN VERRE À LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2016 DE 102016009810**

(43) Veröffentlichungstag der Anmeldung:
**19.06.2019 Patentblatt 2019/25**

(73) Patentinhaber: **Rodenstock GmbH**
**80687 München (DE)**

(72) Erfinder:
• **TIEMANN, Markus**
**81539 München (DE)**
• **DUMM, Martin**
**94259 Kirchberg (DE)**
• **FÜSS, Monika**
**80337 München (DE)**
• **FENDT, Roswitha**
**81547 München (DE)**
• **WILD, Holger**
**94571 Schaufling (DE)**

(74) Vertreter: **Müller-Boré & Partner**
**Patentanwälte PartG mbB**
**Friedenheimer Brücke 21**
**80639 München (DE)**

(56) Entgegenhaltungen:
DE-A1- 10 333 426    DE-A1- 102008 039 416
DE-A1- 102008 039 416    DE-A1- 102014 005 281
DE-A1- 102014 005 281    US-A1- 2015 277 154
US-A1- 2015 277 154    US-B2- 7 538 863

**Beschreibung**

Die Erfindung betrifft ein Verfahren und eine Vorrichtung zur Überprüfung der Zentrierung zumindest eines Brillenglases.

Die Brillengläser optischer Brillen werden regelmäßig auf bestimmte Sollvorgaben hin berandet, die vom Benutzer der Brille abhängen können. So sollen die optischen Brillengläser der Brille regelmäßig so in der Brillenfassung angeordnet werden, dass Durchblickspunkte der Augen des Benutzers in Gebrauchsstellung an vorbestimmten Positionen auf den jeweiligen Brillengläsern angeordnet sind. Man spricht in diesem Zusammenhang davon, dass die Brillengläser in der Fassung der Brille richtig zentriert werden.

Eine Überprüfung dieser Zentrierung der Brillengläser, also eine Überprüfung einer Fertigungsqualität und/oder einer Einschleifqualität, kann entweder an der fertigen Brille oder an den formgerandeten Brillengläsern erfolgen.

Herkömmlich wird eine Überprüfung der Zentrierung mit händischen Messverfahren durchgeführt, z.B. durch Anzeichnen der Funktionsgravuren und Abmessung von Abständen mit einem Pupillendistanzlineal beim Optiker. Händische Überprüfungen sind Immer fehleranfällig, da sie von menschlichen Personen durchgeführt werden.

Weiterhin sind teilautomatisierte Verfahren zur Überprüfung der Zentrierung, der Einschleifhöhe und/oder der Pupillendistanz bekannt, bei denen zunächst einzelne Punkte (wie z.B. ein Zentrierpunkt) auf den Brillengläsern vormarkiert werden.

Optische Parameter und Begriffe wie z.B. "Pupillendistanz", "Einschleifhöhe", "Zentrierpunkt", "Gebrauchsstellung", "Funktionsgravuren" "Durchblickspunkt" usw. sind in einschlägigen Normen, wie beispielsweise der DIN EN ISO 1366, der DIN 58 208, der DIN EN ISO 8624 und der DIN 5340 definiert und können diesen entnommen werden.

Aus dem Dokument DE 10 2008 039 416 A1 ist ein Verfahren und eine Vorrichtung zum Überprüfen der Zentrierung einer Brille bekannt. Dabei werden montierte Brillengläser mittels eines Bilderkennungssystems vermessen, wobei Permanentmarkierungen erfasst werden. Es werden Soll-Zentrierpunkte ermittelt in Abhängigkeit von der Position der Permanentmarkierungen enthaltenen Daten. Mittels eines Videozentriergeräts werden physiologische Daten eines Brillenträgers der Brille vermessen als Ist-Zentrierpunkte. Schließlich werden die Soll-Zentrierpunkte mit den Ist-Zentrierpunkten verglichen.

Aus dem Dokument DE 10 2014 005 281 A1 ist eine Vorrichtung zur berührungslosen Detektion einer Position von zumindest einem mit Markierungen versehenem Brillenglas im dreidimensionalen Raum mittels eines stereoskopischen Systems bekannt.

Der Erfindung liegt die Aufgabe zugrunde, die Überprüfung der Zentrierung zu vereinfachen und/oder zu verbessern.

Diese Aufgabe wird von den Gegenständen der unabhängigen Ansprüche gelöst. Ausführungsformen der Erfindung sind die Gegenstände der Unteransprüche.

Die Erfindung betrifft ein Verfahren zur Überprüfung der Zentrierung zumindest eines Brillenglases mit den Schritten:

- Anordnen des Brillenglases in einem Aufnahmefeld einer Bildaufnahmevorrichtung;
- Aufnehmen zumindest eines Bildes des Brillenglases mittels der Bildaufnahmevorrichtung;
- Ermitteln der Position von Funktionsgravuren des Brillenglasses im aufgenommenen Bild;
- Ermitteln zumindest einer Glaskontur des Brillenglases im aufgenommenen Bild; und
- Überprüfen der Zentrierung des zumindest einen Brillenglases unter Berücksichtigung der ermittelten Position der Funktionsgravuren, der ermittelten Glaskontur des Brillenglases

- zumindest eines Fassungsscheibenwinkels (a, β) des Brillenglases
- einer vorbekannten, nutzerabhängigen Sollgeometrie der Zentrierung und
- einer Parallaxenverschiebung, falls die Funktionsgravuren (11) auf der Seite des Brillenglases angeordnet sind, die der Bildaufnahmevorrichtung (2) beim Aufnehmen des Bildes abgewandt ist, wobei die Parallaxenverschiebung aus dem Fassungsscheibenwinkel (a, β) und zugehörigen Theoriedaten wie einer Glasdicke, einer Vorderfläche und einer Rückfläche des zumindest einen Brillenglases über Strahldurchrechnung durch das Brillenglas hindurch berechnet wird.

Das Verfahren kann sowohl zur Überprüfung der Zentrierung einer fertigen Brille als auch zur Überprüfung formgerandeter Brillengläser durchgeführt werden. Mit einer fertigen Brille ist dabei eine Brillenfassung gemeint, in die Brillengläser als optische Brillengläser eingesetzt sind. Mit den formgerandeten Brillengläsern sind Brillengläser gemeint, die z.B. aus einem Brillenglasrohling gefertigt sind und die so gerandet sind, dass sie ohne weitere Bearbeitung in eine bestimmte Brillenfassung eingesetzt werden können, um so eine fertige Brille auszubilden. Das Verfahren wird zumindest an einem Brillenglas durchgeführt. Es kann dabei insbesondere an zwei Brillengläsern gleichzeitig oder nacheinander durchgeführt werden, die beide für eine einzige Brille bestimmt sind. Da das Verfahren regelmäßig an den beiden Brillengläsern einer Brille durchgeführt werden kann, wird nachfolgend zumeist auf Brillengläser, also im Plural, Bezug genommen, auch wenn das Verfahren grundsätzlich auch bereits an einem einzigen z.B. formgerandeten Brillenglas durchgeführt werden kann.

Bei dem Verfahren wird zunächst die fertige Brille oder die formgerandeten Brillengläser in dem Aufnahmefeld der Bildaufnahmevorrichtung angeordnet. Bei der Bildaufnahmevorrichtung kann es sich um eine Kamera handeln, insbesondere um eine Digitalkamera wie z.B. eine CCD-Kamera. Das Aufnahmefeld der Bildaufnahmevorrichtung kann ein im Wesentlichen dreidimensionales Raumgebiet sein, welches von der Bildaufnahmevorrichtung aufgenommen werden kann. Das Aufnahmefeld umfasst regelmäßig ein Raumgebiet vor einem Objektiv und/oder einer Linse der Bildaufnahmevorrichtung, welches von einer optischen Achse der Bildaufnahmevorrichtung geschnitten wird.

Die fertige Brille und/oder die formgerandeten Brillengläser kann bzw. können in einem vorbekannten Abstand und Ausrichtung zur Bildaufnahmevorrichtung angeordnet werden, insbesondere zu einer optischen Aufnahmeachse der Bildaufnahmevorrichtung. Dieser Abstand und diese Ausrichtung kann Teil einer Kalibrierung sein, die bei der Überprüfung der Zentrierung berücksichtigt wird.

Mit der Bildaufnahmevorrichtung wird das Bild aufgenommen, insbesondere kann dabei ein digitales Bild der fertigen Brille oder der formgerandeten Brillengläser aufgenommen und/oder erstellt werden. Das Bild enthält zumindest Teile der fertigen Brille oder der formgerandeten Brillengläser. Insbesondere kann das Bild die beiden formgerandeten Brillengläser oder die fertige Brille im Wesentlichen vollständig enthalten. Mit der Bildaufnahmevorrichtung kann entweder ein einziges Bild aufgenommen werden, oder mehrere Bilder. Das aufgenommene Bild enthält bevorzugt einen Bildausschnitt, bei dem durch eines oder beide der Brillengläser hindurch ein hinter den Brillengläsern (also auf der der Bildaufnahmevorrichtung abgewandten Seite der Brillengläser) angeordneter Raumbereich und/oder Gegenstand abgebildet ist. Das Bild kann zumindest teilweise aus einer Perspektive gegen oder in eine Nullblickrichtung durch die Brille und/oder die formgerandeten Brillengläser hindurch aufgenommen sein.

Nach Aufnahme des Bildes wird die Position der Funktionsgravuren der fertigen Brille oder der formgerandeten Brillengläser im aufgenommenen Bild ermittelt. Optische Gläser weisen regelmäßig zumindest zwei Funktionsgravuren auf, die dazu verwendet werden können, die Brillengläser richtig zu zentrieren, zu beranden und/oder in einer Brillenfassung anzuordnen. Die genaue Lage der Funktionsgravuren auf den Brillengläsern kann von Hersteller zu Hersteller variieren. Regelmäßig weisen Brillengläser zwei Funktionsgravuren auf, von denen eine nasal und eine temporal von einer optischen Mitte und/oder einem Zentrierpunkt des jeweiligen Brillenglases angeordnet ist. Bei dezentrierten Gläsern kann die optische Mitte und/oder der Zentrierpunkt des Brillenglases zudem nach oben oder unten zu den Funktionsgravuren versetzt sein.

Da Funktionsgravuren regelmäßig nicht mit dem bloßen Auge erkennbar sind, können die Funktionsgravuren zunächst sichtbar gemacht werden, bevor deren Position im aufgenommenen Bild ermittelt wird. Dazu kann zum Beispiel eine speziell angeordnete Beleuchtungseinheit vorgesehen sein, die so angeordnet und/oder ausgebildet ist, dass die Funktionsgravuren in dem aufgenommenen Bild identifizierbar, erkennbar und/oder ermittelbar sind. Hierbei können die Funktionsgravuren insbesondere dadurch sichtbar gemacht werden, dass durch die Brillengläser hindurch ein Bildschirm aufgenommen wird, auf dem ein oder mehrere verschiedene Muster dargestellt wird/werden, wie zum Beispiel Streifenprojektionen. Eine weitere Möglichkeit zum Sichtbarmachen der Funktionsgravuren kann mittels einer Retroreflektionseinheit erfolgen, wie sie zum Beispiel in der Druckschrift DE 103 33 426 A1 beschrieben ist. Eine weitere mögliche Realisierung beinhaltet eine automatische Erkennung der Gravuren, wie sie zum Beispiel in der Druckschrift DE 10 2014 005 281 A1 beschrieben ist.

Die Positionen der so im aufgenommenen Bild sichtbar gemachten Funktionsgravuren können zum Beispiel graphisch ermittelt werden, insbesondere softwaregesteuert. Hierbei können zunächst Pixelpositionen in dem aufgenommenen Bild ermittelt werden, die in zweidimensionale und/oder dreidimensionale Koordinaten umgerechnet werden können, insbesondere in Weltkoordinaten im Bezugssystem der Erde.

Weiterhin werden im aufgenommenen Bild die Glaskonturen der Brillengläser ermittelt, also z.B. an welchen Positionen die Brillenglasränder im aufgenommenen Bild angeordnet sind. Hierbei können insbesondere die Pixelpositionen der Brillenglasränder ermittelt werden. Es kann ausreichend sein, die Glaskonturen zumindest teilweise und/oder abschnittsweise und/oder punktweise zu ermitteln. Das Ermitteln der Glaskonturen kann an der fertigen Brille anders erfolgen als an formgerandeten Brillengläsern ohne Fassung. So kann für das ermitteln der Glaskonturen einer fertigen Brille die Ermittlung eines einzigen Brillenbezugspunkts ausreichend sein, während zum Ermitteln der Glaskonturen formgerandeter Brillengläser mehr Positionen im aufgenommenen Bild ermittelt werden. Ein Ermitteln der Glaskonturen kann Informationen darüber enthalten, wo (z.B. an welchen Pixeln) um aufgenommen Bild die Brillenglasränder angeordnet sind.

Die Überprüfung der Zentrierung der fertigen Brille oder der formgerandeten Brillengläser erfolgt unter Berücksichtigung von sowohl den ermittelten Positionen der Funktionsgravuren, als auch unter Berücksichtigung der ermittelten Position des zumindest einen Bezugspunkts und/oder der ermittelten Glasform. Weiterhin können bei der Überprüfung zusätzliche Daten berücksichtigt werden, insbesondere vorbekannte nutzerabhängige Daten. Diese vorbekannten, nutzerabhängigen Daten können als die Sollgeometrie der Brille und/oder der Brillengläser bezeichnet werden. Somit kann die Sollgeometrie eine Soll-Zentrierung der fertigen Brille und/oder der formgerandeten Brillengläser umfassen, insbesondere eine Soll-Pupillendistanz und/oder eine Soll-Einschleifhöhe. Weiterhin können die vorbekannten Daten zum Beispiel die Glasdicke beinhalten. Bei der Überprüfung der Zentrierung kann überprüft werden, ob Durchblickspunkte der Augen eines Benutzers, für den die Brille gefertigt wurde oder werden soll, in Gebrauchsstellung an vorbestimmten Positionen auf den jeweiligen Brillengläsern der Brille angeordnet sind. Hierbei können ermittelte Ist-Positionen der Durchblickspunkte mit theoretischen Soll-Positionen der Durchblickspunkte verglichen werden.

Bei der Überprüfung der Zentrierung kann ermittelt werden, ob die Ist-Positionen der Durchblickspunkte um maximal einen vorbestimmten Wert von den Soll-Positionen der Durchblickspunkte abweichen. Diese vorbestimmte und/oder zulässige Abweichung von der Positionen der Durchblickspunkte kann abhängig vom Typ des Brillenglases sein. So kann eine zulässige Abweichung z.B. bei Gleitsichtgläsern geringer sein als eine zulässige Abweichung bei Brillengläsern mit einer einzigen Sehstärke. Die Überprüfung kann somit eine Überprüfung beinhalten, ob zulässige Abweichungen der Zentrierung eingehalten werden oder nicht.

Durch das Verfahren wird eine Möglichkeit bereitgestellt, die Zentrierung der fertigen Brille und/oder der formgerandeten Brillengläser möglichst automatisch zu überprüfen. Bei dem Verfahren kann die Fehlerquelle Mensch ausgeschlossen oder zumindest reduziert werden. Die Überprüfung erfolgt zumindest teilautomatisch, insbesondere im Wesentlichen vollautomatisch. Beim Ermitteln von Positionen in dem aufgenommenen Bild, also insbesondere beim Ermitteln der Position der Funktionsgravuren, beim Ermitteln der Glaskonturen der Brillengläser, kann zusätzlich eine manuelle Bestätigung einzelner Punkt in den aufgenommenen Bildern durch einen Optiker oder eine andere Bedienperson vorgesehen sein. In anderen Ausführungsformen kann auf diese manuelle Überprüfung verzichtet werden.

Durch das Verfahren wird die Überprüfung der Zentrierung der fertigen Brille oder der formgerandeten Brillengläser vereinfacht und verbessert. Insbesondere müssen so beim Überprüfen der Zentrierung keine Punkte auf den Brillengläsern markiert werden oder sein. Auf eine manuelle Vermessung der Zentrierung kann verzichtet werden.

Gemäß einer Ausführungsform wird das zumindest eine Brillenglas entweder in einer fertigen Brille oder als formgerandetes Brillenglas bereitgestellt. Hierbei wird die Glaskontur des Brillenglases im aufgenommenen Bild entweder

- durch Ermitteln der Position zumindest eines Brillenbezugspunkts der Brille im aufgenommenen Bild ermittelt oder
- durch Ermitteln einer Glasform des formgerandeten Brillenglases im aufgenommenen Bild ermittelt.

Dabei wird die Zentrierung der Brille oder der formgerandeten Brillengläser unter Berücksichtigung der ermittelten Position des Brillenbezugspunkts oder der ermittelten Glasform überprüft.

Der Verfahrensschritt des Ermittelns der Glaskonturen ist hierbei also ein Ermitteln der Position zumindest eines Brillenbezugspunkts der fertigen Brille im aufgenommenen Bild und/oder einer Glasform der formgerandeten Brillengläser im aufgenommenen Bild.

Bei diesem Ausführungsbeispiel wird somit unterschieden, ob die Zentrierung an einer fertigen Brille überprüft wird, oder ob die Zentrierung formgerandeter Brillengläser überprüft wird. Davon abhängig können die einzelnen Verfahrensschritte unterschiedlich durchgeführt werden, insbesondere das Ermitteln der Glaskonturen.

Für den Fall, dass die Zentrierung an einer fertigen Brille überprüft wird, kann in demselben Bild und/oder einem weiteren aufgenommenen Bild die Position zumindest eines Brillenbezugspunkts der fertigen Brille ermittelt werden. Als ein Brillenbezugspunkt kann zum Beispiel ein Mittelpunkt des Nasenstegs der Brille ermittelt werden. Der Brillenbezugspunkt dient dazu, die Positionen der Funktionsgravuren mit der Ausrichtung und Position der Brillenfassung vergleichen und in Bezug setzen zu können. Insbesondere kann anhand des Brillenbezugspunkts ermittelt werden, wie die Brillengläser in der Brillenfassung angeordnet sind. Ist dieser zumindest eine Brillenbezugspunkt im aufgenommenen Bild ermittelt, so sind zusammen mit den Positionen der Funktionsgravuren hinreichende Daten zur Überprüfung der Zentrierung der fertigen Brille ermittelt. Hierbei können ausgehend vom Brillenbezugspunkt vorbekannte Fassungsdaten (wie z.B. eine Fassungskontur) der Brillenfassung berücksichtigt werden, um die Glaskonturen im aufgenommenen Bild zu ermitteln und/oder zu bestimmen.

Wird die Zentrierung an formgerandeten Brillengläsern überprüft, die noch nicht in eine Fassung eingesetzt sind, so kann anstelle des Brillenbezugspunkts die Glasform der formgerandeten Brillengläser zumindest teilweise ermittelt werden. Dies kann für jedes formgerandete Brillenglas einzeln erfolgen, oder für die beiden formgerandeten Brillengläser einer einzigen Brille zugleich anhand eines einzigen Bildes, in dem beide formgerandeten Brillengläser abgebildet sind. Hierbei kann insbesondere zumindest teilweise eine Kontur der formgerandeten Brillengläser, also ein Verlauf der Ränder der formgerandeten Brillengläser, im aufgenommenen Bild ermittelt werden, insbesondere graphisch und/oder softwaregestützt. Aus der Glasform und/oder der Glaskontur kann abgeschätzt werden, an welchen Positionen relativ zu den Funktionsgravuren bei der fertigen Brille der Fassungsrand und/oder der Brillenglasrand angeordnet sein wird. Bei der Ermittlung der Glasform kann es ausreichend sein, zumindest drei voneinander beabstandete Punkte, bevorzugt zumindest vier voneinander beabstandete Punkte, auf jedem der formgerandeten Brillengläser in dem aufgenommenen Bild zu ermitteln. Hierbei kann insbesondere ein temporaler, ein nasaler, ein oberer und/oder ein unterer Punkt auf dem Brillenglasrand ermittelt werden, um die Glasform zu ermitteln. Durch ein Ermitteln der Glasform der formgerandeten Brillengläser ist somit die Glaskontur der Brillengläser ermittelt.

Durch diese Unterscheidung zwischen der Überprüfung der Zentrierung einer fertigen Brille von der Überprüfung der Zentrierung formgerandeter Brillengläser werden die einzelnen Verfahrensschritte für die jeweilige Anwendung optimiert.

Erfindungsgemäß wird beim Überprüfen der Zentrierung der Brillengläser eine Parallaxenverschiebung berücksichtigt, falls die Funktionsgravuren auf der Seite der Brille oder der formgerandeten Brillengläser angeordnet sind, die der Bildaufnahmevorrichtung beim Aufnehmen des Bildes abgewandt ist. Die Berücksichtigung der Parallaxenverschiebung erfolgt beim Überprüfen der Zentrierung und kann in die Berechnung des oder der Durchblickspunkt(e) mit eingerechnet werden. Die Parallaxenverschiebung kann dann auftreten, wenn die Funktionsgravuren auf der Seite der Brillengläser angeordnet sind, die der Bildaufnahmevorrichtung abgewandt ist. In diesem Fall sind die Funktionsgravuren im aufgenommen Bild durch die Brillengläser hindurch aufgenommen.

Bei der Berechnung der Parallaxenverschiebung kann auf weitere Daten zurückgegriffen werden, insbesondere kann zumindest eine Dicke, zumindest ein Brechungsindex, zumindest eine optische Stärke, zumindest ein Fassungsscheibenwinkel und/oder zumindest eine Vorneigung der Brillengläser berücksichtigt werden. So kann die tatsächliche (oder reale) Position der Funktionsgravuren um bis zu einem oder sogar mehreren Millimetern von der Position abweichen, an der sie im aufgenommenen Bild unmittelbar (d.h. ohne Berücksichtigung der Parallaxenverschiebung) ermittelt werden. Durch Berücksichtigung der Parallaxenverschiebung wird somit die Überprüfung der Zentrierung verbessert. Wird das Bild von der Seite der Brillengläser aufgenommen, auf der die Funktionsgravuren angeordnet sind, kann auf eine Berücksichtigung der Parallaxenverschiebung verzichtet werden. Da die Funktionsgravuren abhängig vom Hersteller einmal auf der dem Benutzer zugewandten Seite der Brillengläser angeordnet sein können und einmal auf der dem Benutzer abgewandten Seite, verbessert die Überprüfung auf ein Vorhandensein eines Parallaxenfehlers die Vielseitigkeit des Verfahrens.

Gemäß einer Ausführungsform wird bei der Ermittlung der Position der Funktionsgravuren auf einer der Bildaufnahmevorrichtung abgewandten Seite der Brillengläser eine Struktur angeordnet, welche zumindest teilweise im aufgenommenen Bild durch die Brillengläser hindurch abgebildet wird. Die Struktur kann zum Beispiel von einem Bildschirm erzeugt werden und/oder auf die Brillengläser projiziert werden. Die Struktur kann insbesondere als ein Streifenmuster ausgebildet sein und/oder zumindest ein Muster mit einer Mehrzahl von Kontrastübergängen zwischen unterschiedlich erleuchteten Bereichen aufweisen. Die Struktur kann alternativ zu einem Bildschirm auch als eine fertig erstellte, zum Beispiel auf einer Folie oder einer Druckfläche ausgedruckte statische Struktur ausgebildet sein, die vorab erzeugt worden ist. Bei der Aufnahme des Bildes ist die Struktur auf der Seite der Brillengläser angeordnet, die beim Aufnehmen des Bildes durch die Brillengläser hindurch aufgenommen wird. Im aufgenommenen Bild kann zum Beispiel graphisch und/oder softwaregesteuert ermittelt werden, wo zum Beispiel eine Störung der Struktur darauf hindeutet, dass an dieser Position eine Funktionsgravur oder ein Rand des Brillenglases angeordnet ist. Die Verwendung der Struktur vereinfacht und/oder ermöglicht somit das Ermitteln der Positionen der Funktionsgravuren, deren Kenntnis für die Überprüfung der Zentrierung weiter verarbeitet wird. Mit anderen Worten macht die Struktur die Funktionsgravuren im aufgenommenen Bild sichtbar und/oder ermittelbar.

Gemäß einem Ausführungsbeispiel wird zumindest ein Fassungsscheibenwinkel der Brillengläser ermittelt und der ermittelte Fassungsscheibenwinkel beim Überprüfen der Zentrierung der Brillengläser berücksichtigt. Der Fassungsscheibenwinkel ist in den eingangs aufgelisteten Normen definiert und beschreibt eine Neigung der Brillengläser in der Brillenfassung um eine Drehachse, die in Gebrauchsstellung im Wesentlichen vertikal ausgerichtet ist. Die Berücksichtigung des Fassungsscheibenwinkels verbessert die Überprüfung der Zentrierung. Deswegen ist es vorteilhaft, den Fassungsscheibenwinkel in die Überprüfung der Zentrierung mit einzubeziehen. Regelmäßig ist der Fassungsscheibenwinkel lediglich bei der Überprüfung einer fertigen Brille zu berücksichtigen, da formgerandete Brillengläsern im Wesentlichen ohne diese Neigung relativ zur optischen Aufnahmeachse der Bildaufnahmevorrichtung angeordnet werden können. Bei der Überprüfung der Zentrierung von formgerandeten Gläsern kann anstelle des Fassungsscheibenwinkels ein Neigungswinkel der formgerandeten Gläser relativ zur optischen Aufnahmeachse der Bildaufnahmevorrichtung berücksichtigt und/oder vorab ermittelt werden, der im Wesentlichen dem Fassungsscheibenwinkel entspricht. Anstelle der Überprüfung des Fassungsscheibenwinkels kann somit allgemeiner auch die (z.B. horizontale und/oder vertikale) Ausrichtung und/oder Neigung der Brillengläser relativ zur optischen Aufnahmeachse der Bildaufnahmevorrichtung ermittelt und mit berücksichtigt werden.

In einer Weiterbildung dieser Ausführungsform wird der Fassungsscheibenwinkel (oder allgemeiner: die Ausrichtung und/oder Neigung der Brillengläser relativ zur optischen Aufnahmeachse) mittels Auswertung einer Reflexion zumindest einer Laserlinie an den Brillengläsern ermittelt. Bei dem Verfahren wird somit genau der Fassungsscheibenwinkel (bzw. die Ausrichtung und/oder Neigung) ermittelt, unter dem die Brillengläser im Aufnahmefeld der Bildaufnahmevorrichtung angeordnet sind. Hierzu kann zum Beispiel die Reflexion einer Laserlinie verwendet werden, die von einem Laserscanner über die fertige Brille oder die formgerandeten Brillengläser erzeugt wird. Die Position der Laserlinie kann dabei variieren. Insbesondere kann bei Verwendung eines Scanners die Laserlinie über Teile der Oberfläche der Brillengläser projiziert werden. Die Laserlinie kann insbesondere quer über beide Brillengläser der Brille angeordnet sein, also in eine in Gebrauchsstellung im Wesentlichen horizontale und/oder nasal-temporale Richtung. Eine solche Ausrichtung der Laserlinie vereinfacht die Ermittlung des Fassungsscheibenwinkels, der ebenfalls eine Neigung der Brillengläser in einer im Wesentlichen nasal-temporalen Richtung beschreibt. Die Reflexion der Laserlinie kann entweder mittels eines separaten Messgerätes registriert und/oder ausgewertet werden; oder mittels der Bildaufnahmevorrichtung detektiert und/oder ermittelt werden. Insbesondere kann die Reflexion der Laserlinie in dem von der Bildaufnahmevorrichtung aufgenommenen Bild ermittelt, registriert und/oder ausgewertet werden.

Hierbei kann als Laserlinie Laserlicht einer Wellenlänge von etwa 400 nm bis etwa 500 nm verwendet werden. Zur Ermittlung des Fassungsscheibenwinkels (oder allgemeiner: der Ausrichtung und/oder Neigung der Brillengläser relativ zur optischen Aufnahmeachse) wird somit ein blaues Laserlicht verwendet. Blaues Licht hat gegenüber rotem Licht den Vorteil, dass ein größerer Bestandteil hiervon an Brillengläsern reflektiert wird, die oft im roten Wellenlängenbereich schwach reflektierend ausgebildet sind. Die Beschränkung auf eine Wellenlänge oberhalb von etwa 400 nm schließt weiterhin die Verwendung von UV-Licht aus. Zwar wäre die Reflexion für UV-Licht an Brillengläsern üblicherweise noch besser als für blaues Licht, jedoch wären bei Verwendung von UV-Licht zusätzliche Maßnahmen zum Schutz einer Bedienperson erforderlich. Deswegen eignet sich gerade blaues Laserlicht besonders gut zur Ermittlung des Fassungsscheibenwinkels.

Alternativ zur Ermittlung des Fassungsscheibenwinkels mittels einer Laserlinie, die auf die Brillengläser projiziert wird, kann der Fassungsscheibenwinkel aus Fertigungsdaten einer Brillenfassung der Brille ermittelt werden und/oder mittels eines externen Messgeräts. So kann der Fassungsscheibenwinkel zum Beispiel vorbekannt sein, da er für die Brille fest vorgegeben ist. Der Fassungsscheibenwinkel kann entweder direkt aus den Fertigungsdaten übernommen werden oder zum Beispiel anhand eines anderen externen Messgeräts ermittelt werden. In diesem Fall werden der oder die ermittelten Fassungsscheibenwinkel registriert, zum Beispiel manuell eingegeben oder automatisch an eine Überprüfungsvorrichtung übermittelt, und bei der Überprüfung der Zentrierung berücksichtigt.

Gemäß einer Ausführungsform werden für den Fall, dass die Zentrierung an zumindest einem formgerandeten Brillenglas überprüft wird, das formgerandete Brillenglas unter einem Fassungsscheibenwinkel von etwa 0° (oder allgemeiner: praktisch ohne Neigung der formgerandeten Brillengläser relativ zur optischen Aufnahnieachse) im Aufnahmefeld der Bildaufnahmevorrichtung angeordnet, wobei beim Überprüfen der Zentrierung der Fassungsscheibenwinkel unberücksichtigt bleibt (oder allgemeiner: die Ausrichtung und/oder Neigung der formgerandeten Brillengläser relativ zur optischen Aufnahmeachse). Bei der Überprüfung der formgerandeten Brillengläser können diese so im Aufnahmefeld der Bildaufnahmevorrichtung angeordnet werden, dass die Bildaufnahmevorrichtung im Wesentlichen senkrecht durch die formgerandeten Brillengläser hindurch das Bild aufnimmt. Mit anderen Worten steht die optische Aufnahmeachse der Bildaufnahmevorrichtung im Wesentlichen senkrecht auf der Oberfläche der formgerandeten Brillengläser, so dass die optische Aufnahmeachse der Bildaufnahmevorrichtung bei einem Soll-Fassungscheibenwinkel von 0° mit Wesentlichen parallel zur Durchblicksrichtung angeordnet ist (zumindest in einer Projektion auf eine horizontale Ebene aus der Gebrauchsstellung). In diesem Fall kann bei der Überprüfung der Zentrierung anhand des aufgenommenen Bildes von einem Fassungsscheibenwinkel von etwa 0° ausgegangen werden. Deswegen muss der Fassungsscheibenwinkel bei der Überprüfung der Zentrierung nicht berücksichtigt werden. Gleiches oder ähnliches kann für eine Vorneigung der formgerandeten Brillengläser gelten. Dadurch, dass der Fassungsscheibenwinkel nicht berücksichtigt wird, kann die Überprüfung vereinfacht werden.

Gemäß einer Auführungsform wird eine Vorneigung der Brillengläser ermittelt und die ermittelte Vorneigung beim Überprüfen der Zentrierung der Brillengläser berücksichtigt. Die Vorneigung einer Brille ist ebenfalls in den eingangs genannten Normen definiert und beschreibt eine Neigung der Brillengläser um eine Drehachse, die in Gebrauchsstellung im Wesentlichen horizontal durch beide Brillengläser verlaufend ausgerichtet ist. Die Vorneigung kann, ähnlich wie der Fassungsscheibenwinkel, mittels einer Auswertung einer Reflexion zumindest einer Laserlinie an den Brillengläsern ermittelt werden. Hierbei kann die Laserlinie insbesondere in eine im Wesentlichen vertikale Richtung über die Brillengläser projiziert Laserlinie werden. Der Begriff vertikal bezieht sich dabei auf die Position, die die fertige Brille oder die formgerandeten Brillengläser in Gebrauchsstellung einnehmen würde(n). Hierbei kann die Laserlinie aus den voranstehend beschriebenen Gründen insbesondere als eine blaue Laserlinie ausgebildet sein. Alternativ oder zusätzlich können vorbekannte Werte für die Vorneigung aus Fertigungsdaten einer Fassung der Brille verwendet und/oder ermittelt werden, bzw. die Vorneigung mittels eines externen Messgeräts ermittelt werden. Die Berücksichtigung der Vorneigung verbessert die Überprüfung der Zentrierung weiter.

Die Erfindung betrifft eine Vorrichtung zur Uberprüfung der Zentrierung von Brillengläsern mit:

- einer Glasaufnahme zur Aufnahme der Brillengläser;
- einer Bildaufnahmevorrichtung zum Aufnehmen eines Bildes der in der Glasaufnahme angeordneten Brillengläser;
- einem Gravurenermittlungsmittel zum Ermitteln von Positionen von Funktionsgravuren der Brillengläser im aufgenommenen Bild;
- einem Geometrieermittlungsmittel zum Ermitteln von Glaskonturen der . Brillengläser im aufgenommenen Bild; und

**EP 3 497 509 B1**

- einem Überprüfungsmittel zum Überprüfen der Zentrierung der Brillengläser unter Berücksichtigung der ermittelten Position der Funktionsgravuren, der ermittelten Glaskonturen

- zumindest eines Fassungsscheibenwinkels (a, β) des Brillenglases
- einer vorbekannten, nutzerabhängigen Sollgeometrie der Zentrierung und
- einer Parallaxenverschiebung, falls die Funktionsgravuren (11) auf der Seite des Brillenglases angeordnet sind, die der Bildaufnahmevorrichtung (2) beim Aufnehmen des Bildes abgewandt ist, wobei die Parallaxenverschiebung aus dem Fassungsscheibenwinkel (a, β) und zugehörigen Theoriedaten wie einer Glasdicke, einer Vorderfläche und einer Rückfläche des zumindest einen Brillenglases über Strahldurchrechnung durch das Brillenglas hindurch berechnet wird.

Die Vorrichtung kann insbesondere zum Durchführen des Verfahrens gemäß dem voranstehend beschriebenen Aspekt benutzt werden. Deswegen beziehen sich alle im Zusammenhang mit dem voranstehenden Aspekt gemachten Ausführungen auch auf die Vorrichtung und umgekehrt. Bei der Vorrichtung kann die Bildaufnahmevorrichtung zum Beispiel als eine Digitalkamera ausgebildet sein, insbesondere als eine CCD-Kamera. Die Glasaufnahme kann zum Aufnehmen und/oder zum Anordnen der fertigen Brille oder der formgerandeten Brillengläser im Aufnahmefeld der Bildaufnahmevorrichtung ausgebildet sein. Als Gravurenermittlungsmittel kann eine Bildverarbeitung vorgesehen sein, insbesondere eine softwaregesteuerte graphische Auswertung des aufgenommenen Bildes erfolgen. Das Geometrieermittlungsmittel kann ebenfalls durch eine Graphikauswertung realisiert werden, insbesondere durch eine softwaregesteuerte und/oder softwaregestützte Graphikauswertung. Das Überprüfungsmittel kann ebenfalls mittels Software gesteuert sein.

In einer Ausführungsform der Vorrichtung berücksichtigt das Überprüfungsmittel beim Überprüfen der Zentrierung der Brillengläser eine Parallaxenverschiebung, falls die Funktionsgravuren auf der Seite der Brillengläser angeordnet sind, die der Bildaufnahmevorrichtung beim Aufnehmen des Bildes abgewandt ist. Hierbei kann das Überprüfungsmittel zunächst überprüfen und/oder feststellen, auf welcher Seite der Brillengläser die Funktionsgravuren angeordnet sind. Anschließend kann das Überprüfungsmittel - abhängig vom Ergebnis - entweder die Parallaxenverschiebung berücksichtigen oder nicht.

Gemäß einer Ausführungsform weist die Vorrichtung ein Ausrichtungsermittlungsmittel auf zum Ermitteln einer Ausrichtung der Brillengläser relativ zu einer optischen Aufnahmeachse der Bildaufnahmevorrichtung, wobei das Überprüfungsmittel dazu ausgelegt ist, die ermittelte Ausrichtung beim Überprüfen der Zentrierung der Brillengläser zu berücksichtigen. Hierbei kann das Ausrichtungsermittlungsmittel insbesondere als ein Fassungsscheibenwinkelermittlungsmittel und/oder ein Vorneigungsermittlungsmittel ausgebildet sein. Wie im Zusammenhang mit dem vorangegangenen Aspekt beschrieben, kann das Ausrichtungsermittlungsmittel zum Beispiel einen Projektor für einen Laserlinie beinhalten, der zumindest eine Laserlinie auf und/oder über die fertige Brille und/oder die formgerandeten Brillengläser projiziert. Das Ausrichtungsermittlungsmittel kann insbesondere einen Laserscanner beinhalten, bevorzugt einen Laserscanner der blaues Laserlicht emittiert.

Gemäß einer Ausführungsform weist die Bildaufnahmevorrichtung ein telezentrisches Objektiv auf. Ein telezentrisches Objektiv ist besonders geeignet, eine Aufnahme der fertigen Brille oder der formgerandeten Brillengläser anzufertigen, in der die Positionen einzelner Punkte ermittelt werden, da die aufgenommenen Bilder keine Verzerrungen aufweisen. Insbesondere kann durch ein telezentrisches Objektiv besonders gut eine Struktur durch die Brillengläser hindurch aufgenommen werden, die zur Ermittlung einzelner Positionen auf den Brillengläsern graphisch ausgewertet werden kann.

Gemäß einer Ausführungsform weist die. Vorrichtung ein Strukturerzeugungsmittel zum Erzeugen einer Struktur auf der der Bildaufnahmevorrichtung abgewandten Seite der Brillengläser auf, wobei die Struktur im aufgenommenen Bild durch die Brillengläser hindurch abbildbar ist. Als Strukturerzeugungsmittel kann zum Beispiel ein Bildschirm und/oder eine (z.B. beleuchtete) strukturierte Oberfläche verwendet werden. Wird als Strukturerzeugungsmittel ein Bildschirm verwendet, so kann die Struktur gezielt angesteuert werden, insbesondere kann eine Helligkeit der Struktur eingestellt werden und/oder die Dimensionen einzelner Elemente der Struktur können einstellbar sein.

Gemäß einer Ausführungsform ist die Glasaufnahme im Wesentlichen transparent ausgebildet und/oder die Glasaufnahme nimmt die fertige Brille oder die formgerandeten Brillengläser an einem bezüglich einer optischen Aufnahmeachse der Bildaufnahmevorrichtung lateralen Bereich auf. Diese Ausbildung der Glasaufnahme ermöglicht es, das Bild so aufzunehmen, dass zum Beispiel eine Struktur durch die Brillengläser hindurch im aufgenommenen Bild enthalten ist. Insbesondere kann dazu die Glasaufnahme transparent ausgebildet sein, zum Beispiel aus einem Glas und/oder Kunststoff. Alternativ und zusätzlich kann die Glasaufnahme die Brille oder die Brillengläser lediglich an einem Randbereich festhalten, also an einem lateralen und/oder temporalen Bereich, so dass die Aufnahme trotz Verwendung der Glasaufnahme durch die Brillengläser hindurch erfolgen kann.

Die Erfindung betrifft ein Computerprogrammprodukt, welches Programmteile enthält, welche, wenn sie auf einem Prozessor ausgeführt werden, gemäß dem erfindungsgemäßen Verfahren die Position der Funktionsgravuren ermitteln, die Glaskonturen der Brillengläser ermitteln (die also z.B. die Position des Brillenbezugspunkts der Brille und/oder die Glasform der Brillengläser ermitteln) und die Zentrierung Brille oder der Brillengläser überprüfen. Weiterhin können Programmteile des Computerprogrammprodukts weitere Schritte des Verfahrens durchführen, wie zum Beispiel die Ermittlung eines Fassungsscheibenwinkels, die Ermittlung einer Vorneigung und/oder eine entsprechende Berücksichtigung der Ausrichtung/Neigung der Brillengläser beim Überprüfen der Zentrierung.

Die Erfindung wird nachfolgend anhand von in Figuren gezeigten Ausführungsbeispielen näher beschrieben. Einzelne in den Figuren gezeigte Merkmale können in anderen Ausführungsformen realisiert und/oder implementiert sein. Gleiche Bezugszeichen können gleiche oder ähnliche Merkmale der Ausführungsformen kennzeichnen. Es zeigen:

Figur 1   eine schematisch dargestellte Vorrichtung zur Überprüfung der Zentrierung einer fertigen Brille und/oder formgerandeter Brillengläser;

Figur 2   eine schematisch dargestellte Brille, die von einem Fassungsscheibenwinkerermittlungsmittel untersucht wird;

Figur 3   in einer schematischen Darstellung, wie aus einem Oberflächenverlauf Fassungsscheibenwinkel einer Brille ermittelt werden; und

Figur 4   ein schematisches Ablaufdiagramm eines Verfahrens zur Überprüfung der Zentrierung einer fertigen Brille oder formgerandeter Brillengläser.

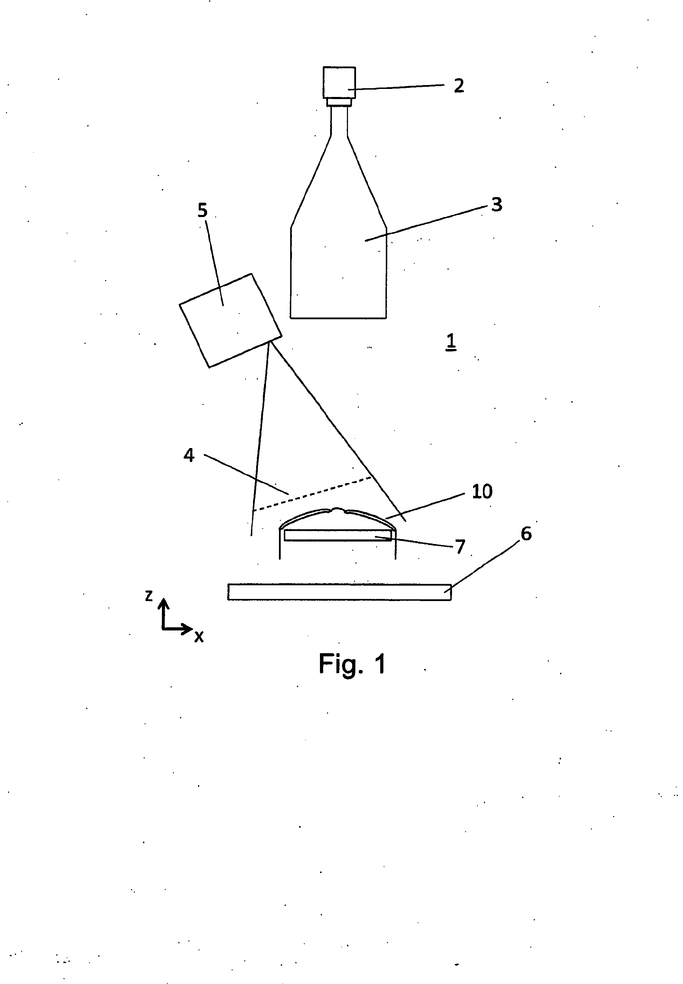

**Figur 1** zeigt in einer schematischen Darstellung eine Vorrichtung 1 zur Überprüfung der Zentrierung von Brillengläsern, also der Zentrierung einer fertigen Brille 10 und/oder der Zentrierung formgerandeter Brillengläser. Die Vorrichtung 1 weist eine Bildaufnahmevorrichtung 2 auf, die zum Beispiel als eine CCD-Kamera ausgebildet sein kann. Die Bildaufnahmevorrichtung 2 weist ein Objektiv 3 auf, das insbesondere als ein telezentrisches Objektiv ausgebildet sein kann. Die Ausrichtung des Objektivs 3 bestimmt die Ausrichtung der optischen Aufnahmeachse der Bildaufnahmevorrichtung 2.

Die Bildaufnahmevorrichtung 2 ist so ausgerichtet, dass die optische Aufnahmeachse der Bildaufnahmevorrichtung 2 von dem Objektiv 3 der Bildaufnahmevorrichtung 2 hin zu der Brille 10 weist, die im Aufnahmefeld der Bildaufnahmevorrichtung 2 angeordnet ist.

In den Figuren ist ein kartesisches Koordinatensystem gezeigt, bei dem die Koordinaten mit x, y und z bezeichnet sind. Hierbei können die x und die z-Richtung im Wesentlichen horizontal ausgerichtete Richtungen sein, während die y-Richtung in einer vertikale Richtung ausgerichtet sein kann, also von oben nach unten weisend.

Die Begriffe horizontal und vertikal beziehen sich auf Richtungen relativ zur Brille 10, wenn sie in Gebrauchsstellung getragen wird. In Gebrauchsstellung weist die x-Richtung von der Glasmitte eines Brillenglases in eine im Wesentlichen nasale bzw. temporale Richtung, während die z-Richtung im Wesentlichen mit der Nullblickrichtung zusammenfällt. Die y-Richtung weist im Wesentlichen von einem oberen Brillenglasrand zu einem unteren Brillenglasrand, und zwar In Gebrauchsstellung im Wesentlichen vertikal nach unten.

In Figur 1 ist die optische Aufnahmeachse der Bildaufnahmevorrichtung 2 so angeordnet, dass sie im Wesentlichen parallel zur z-Richtung, und zwar entgegen der Durchblicksrichtung weisend, angeordnet ist.

Die gefertigte Brille 10 ist so im Aufnahmefeld der Bildaufnahmevorrichtung 2 angeordnet, dass die Bildaufnahmevorrichtung 2 ein Bild aufnehmen kann, das sowohl die Brille 10 enthält als auch ein Strukturerzeugungsmittel 6, das auf der der Bildaufnahmevorrichtung 2 abgewandten Seite der Brillengläser der Brille 10 angeordnet ist. Mit anderen Worten kann von der Bildaufnahmevorrichtung 2 ein Bild von dem Strukturerzeugungsmittel 6 durch die Brillengläser der Brille 10 hindurch aufgenommen werden.

Das Strukturerzeugungsmittel 6 kann insbesondere als ein Bildschirm ausgebildet sein, auf dem eine Struktur dargestellt ist. Die Struktur kann zum Beispiel als ein Streifenmuster ausgebildet sein und/oder Streifen aufweisen. Bei der Aufnahme eines Bildes der Struktur, das von dem Strukturerzeugungsmittel 6 erzeugt wird, durch die Brillengläser der Brille 10 hindurch, können Unregelmäßigkeiten der Struktur erkannt werden. Diese Unregelmäßigkeiten können zum Beispiel Funktionsgravuren der Brillengläser uhd /oder Rändern der Brillengläser zugeordnet werden.

Die Brille 10 kann an und/oder in einer Glasaufnahme 7 angeordnet sein. Die Glasaufnahme 7 kann als eine Halterung ausgebildet sein, insbesondere als eine transparente Halterung. Die transparente Ausbildung der Glasaufnahme ermöglicht es, dass die Bildaufnahmevorrichtung 2 ein Bild durch die Brillengläser der Brille 10 hindurch von der Struktur aufnehmen kann, die von dem Strukturerzeugungsmittel 6 angezeigt wird. Die Glasaufnahme 7 kann alternativ oder zusätzlich als eine seitliche Klemmvorrichtung ausgebildet sein, die die Brille 10 lediglich an zur Brillenfassung benachbarten Randseiten hält, um so die Aufnahme der Struktur durch die Brillengläser hindurch nicht zu behindern oder lediglich geringfügig zu behindern.

Die Vorrichtung 1 weist weiterhin ein Ausrichtungsermittlungsmittel 5 auf. Das Ausrichtungsermittlungsmittel 5 kann als ein Laserscanner ausgebildet sein, der dazu ausgebildet und vorgesehen ist, eine Laserlinie 4 auf die Brille 10 zu projizieren. Auf die Funktionsweise des Ausrichtungsermittlungsmittel 5 ist näher in den nachfolgenden Figuren eingegangen.

Die Vorrichtung 1 ist dazu ausgebildet und vorgesehen, ein Bild von der Brille 10 aufzunehmen. Anstelle der Brille 10 könnten auch die zwei Brillengläser der Brille 10 in einem formgerandeten Zustand zur Aufnahme des Bildes verwendet werden. Die Vorrichtung 1 nimmt zumindest ein Bild der Brille 10 auf, in welchem es die Funktionsgravuren der Brille 10 detektiert und deren Position ermittelt.

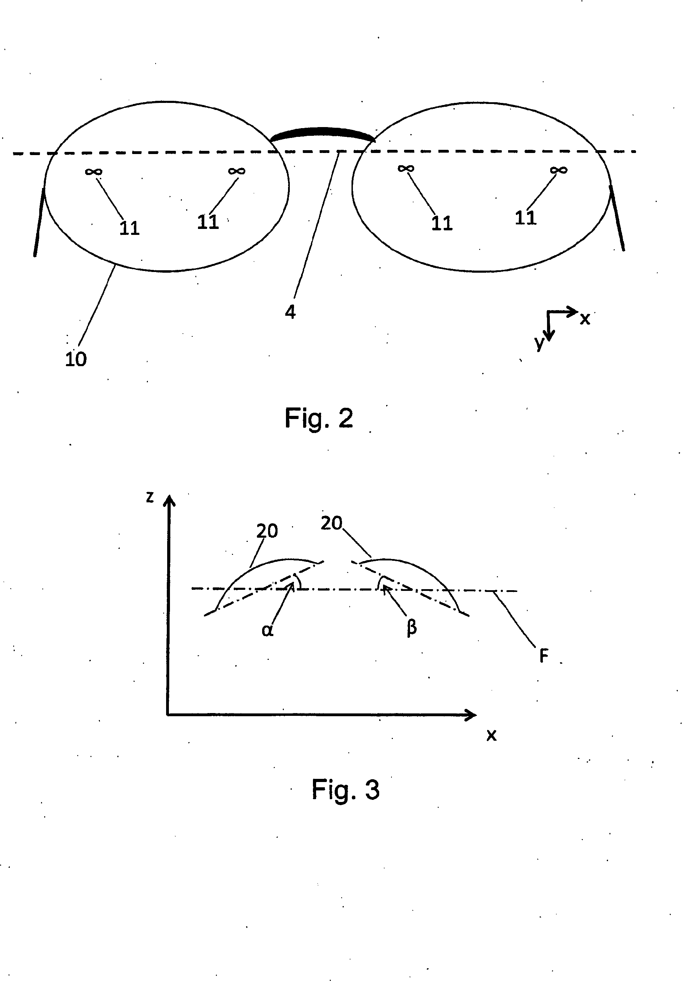

**Figur 2** zeigt in einer schematischen Darstellung die fertigen Brille 10. Die Brille 10 weist eine Fassung mit zwei Bügeln und einem Nasensteg auf, in die zwei Brillengläser eingesetzt sind. Wie in der Figur durch die Unendlichzeichen gekennzeichnet, weist die Brille 10 auf jedem der beiden formgerandeten Brillengläser zumindest zwei Funktionsgravuren 11 auf.

Die genaue Position der Funktionsgravuren 11 ist abhängig vom Hersteller und/oder dem genauen Glasmodell. Üblicherweise weist jedes Brillenglas zumindest zwei der Funktionsgravuren 11 auf. Hierbei sind die Funktionsgravuren 11 nicht direkt in der Mitte oder optischen Mitte des jeweiligen Brillenglases angeordnet, sondern insbesondere links und rechts, also temporal und nasal - versetzt zum Durchblickspunkt eines Benutzers der Brille angeordnet. Bei dezentralen Brillen könne die Funktionsgravuren 11 auch zusätzlich nach oben oder unten versetzt angeordnet sein.

Dies ist unter anderem deswegen der Fall, um die optischen Eigenschaften des jeweiligen Brillenglases am Durchblickspunkt nicht zu beeinträchtigen. Mit bloßem Auge sind die Funktionsgravuren 11 eines Brillenglases üblicherweise nicht oder nur sehr schwer zu erkennen. Um also die Position der Funktionsgravuren 11 im aufgenommenen Bild detektieren und/oder ermitteln zu können, werden die Funktionsgravuren zunächst sichtbar gemacht. Dazu stehen verschiedene Möglichkeiten zur Verfügung.

Die Bildaufnahmevorrichtung 2 ist so ausgerichtet, dass sie die Funktionsgravuren 11 der nebeneinander angeordneten Brillengläser und/oder der fertigen Brille 10 im Bildfeld und/oder in Ihrem Aufnahmebereich hat. Da die Brillengläser unterschiedliche Krümmungen und/oder Dicken aufweisen können, und da weiterhin auch die Fassung der Brille 10 unterschiedlich gekrümmt ausgebildet sein kann, wird das Bild durch das telezentrische Objektiv 3 hindurch aufgenommen, um immer eine scharfe Abbildung ohne perspektivische Verzerrungen zu erhalten. Hierbei kann eine Kalibrierung verwendet werden, um Abstände und Positionen der Funktionsgravuren 11 zum Beispiel in Weltkoordinaten in einer Ebene zu erhalten. Diese Kalibrierung kann Kenntnis über den Abstand der Brille 10 bzw. der Brillengläser von der Bildaufnahmevorrichtung 2 beinhalten, ebenso wie eine fest vorgegebene Ausrichtung der Brille 10 bzw. der Brillengläser relativ zur optischen Aufnahmeachse der Bildaufnahmevorrichtung 2. Bevorzugt kann hierbei als Bild zum Beispiel eine Frontalaufnahme der Brille 10 aufgenommen werden, ähnlich zu der in Figur 2 schematisch gezeigten Brille 10.

In anderen. Ausführungsformen kann die Brille 10 auch in Durchblicksrichtung aufgenommen werden. Wird nicht die Zentrierung einer fertigen Brille 10 sondern lediglich der formgerandeten Brillengläser ohne Fassung überprüft, so können die Brillengläser so in einem vorbekannten Abstand von der Bildaufnahmevorrichtung 2 angeordnet werden, dass die Bildaufnahme 2 in Durchblicksrichtung durch die Brillengläser hindurch erfolgt. Hierbei kann zum Beispiel eine Dreipunktauflage als Glasaufnahme 7 für die konvexe Seite der Brillengläser vorgesehen sein, die diese Brillengläser aufnimmt.

Als ein Teil der Kalibrierung kann auch der Abstand des Strukturerzeugungsmittels 6 von der Bildaufnahmevorrichtung 2 vorbekannt sein. Allgemein kann zur Sichtbarmachung der Funktionsgravuren 11 eine Beleuchtungseinheit verwendet werden, die so optimiert ist, dass die Sichtbarkeit der Funktionsgravuren 11 in dem von der Bildaufnahmevorrichtung 2 aufgenommenen Bild hergestellt werden kann und/oder gegeben ist. Als eine solche Beleuchtungseinheit kann das Strukturerzeugungsmittel 6 verwendet werden. Zur genauen Detektion der Position der Funktionsgravuren 11 in Weltkoordinaten können hierbei mehrere Bilder aufgenommen werden, zum Beispiel bei unterschiedlichen Beleuchtungseinstellungen und/oder Mustereinstellungen des Strukturerzeugungsmittels 6. Diese unterschiedlichen Bilder können softwaretechnisch verarbeitet werden, um eine erhöhte Sichtbarkeit der Funktionsgravuren 11 zu erhalten. Die Funktionsgravuren 11 können dazu führen, dass an den Positionen der Funktionsgravuren 11 eine Störung des aufgenommenen Musters und/oder der aufgenommenen Struktur in den aufgenommenen Bildern zu erkennen ist.

Eine weitere Möglichkeit zum Sichtbarmachen der Funktionsgravuren 11 bietet eine Verwendung einer Retroreflexionseinheit, die zusätzlich zu einer Beleuchtungseinheit verwendet wird. Auf diese Weise könne die Funktionsgravuren 11 automatisch erkannt werden.

Im aufgenommenen Bild kann zusätzlich zumindest ein Brillenbezugspunkt graphisch ermittelt werden, insbesondere die Mitte des Nasenstegs der fertigen Brille 10. Die Ermittlung des Brillenbezugspunkts kann zum Beispiel über eine entsprechende Halterung erfolgen, die mittig zum Nasensteg der Brille 10 positioniert wird und mit einer Markierung versehen ist. Bei formgerandeten Brillengläsern kann anstatt dessen die ungefähre Glasform detektiert und/oder ermittelt werden, um die Zentrierung überprüfen zu können.

Mit anderen Worten kann zum Beispiel die Glasaufnahme 7 so ausgebildet sein, dass sie zumindest eine spezielle Markierung aufweist, die die Detektion des Brillenbezugspunkts im aufgenommenen Bild erleichtert. Die Markierung kann insbesondere den Brillenbezugspunkt im aufgenommenen Bild markieren.

Die Positionen der Funktionsgravuren 11 und/oder des Brillenbezugspunkts können mittels Software und/oder mittels Graphikauswertung von einer Verarbeitungsvorrichtung ermittelt werden, die das zumindest eine aufgenommene Bild auswertet und/oder untersucht. Die Verarbeitungsvorrichtung kann einen Prozessor aufweisen und/oder als ein Computer ausgebildet sein, auf dem eine entsprechende Software läuft. Die Verarbeitungsvorrichtung kann auch den Vorgang der endgültigen Überprüfung der Zentrierdaten durchführen. Dabei kann die Verarbeitungsvorrichtung eine Ausgabe bereitstellen, die einer Bedienperson anzeigt, ob die Zentrierung der Brille 10 hinreichend ist oder nicht.

In die Überprüfung der Zentrierung, insbesondere in die Auswertung in der Verarbeitungsvorrichtung, kann eine Kenntnis über zumindest einen der Fassungsscheibenwinkel eingehen, unter dem die Brillengläser an der Brille 10 angeordnet sind.

**Figur. 3** zeigt in einer schematischen Darstellung die beiden Fassungsscheibenwinkel $\alpha$ und $\beta$. Hierbei bezeichnet $\alpha$ den rechten Fassungsscheibenwinkel und das. Bezugszeichen $\beta$ den linken Fassungsscheibenwinkel der Brille 10. Die genaue Lage der Fassungsscheibenwinkel $\alpha$, $\beta$ ist in den eingangs genannten Normen definiert.

Abhängig vom Fassungsscheibenwinkel $\alpha$, $\beta$ können Verzerrungen im aufgenommenen Bild auftreten, die bei der genauen Positionsbestimmung der Funktionsgravuren 11 berücksichtigt werden können. Die Bestimmung des Fassungsscheibenwinkels $\alpha$, $\beta$ kann auf unterschiedliche Art und Weise erfolgen. So können die Werte der Fassungs- scheibenwinkel $\alpha$, $\beta$ aus einer Datenbank ausgelesen werden, in der die Fassungsscheibenwinkel hinterlegt sind. In der Datenbank können die Werte von Soll-Fassungsscheibenwinkeln hinterlegt sein, die aufgrund der Fertigungsdaten der Fassungen, also zum Beispiel aus 3D-Konstruktionsdaten, resultieren. Bei Verwendung der Soll-Fassungsscheibenwinkel aus einer solchen Datenbank kann eine relativ einfache und schnelle Ermittlung der Fassungsscheibenwinkel $\alpha$, $\beta$ erfolgen.

Da diese theoretischen Soll-Fassungsscheibenwinkel aber nicht immer mit der Realität übereinstimmen, und insbesondere sowohl bei der Fertigung der Brillenfassungen als auch beim Einsetzen der Brillengläser in die Fassung Abweichungen auftreten können, die die realen Fassungsscheibenwinkel verändern, ist die Nutzung dieser theoretischen Soll-Fassungsscheibenwinkels manchmal ungenau.

Bevorzugt werden deswegen die realen Fassungsscheibenwinkel $\alpha$ und $\beta$ ermittelt und bei der Überprüfung der Zentrierung verwendet. Hierzu können die Fassungsscheibenwinkel $\alpha$ und $\beta$ zum Beispiel mit einem externen Messgerät bestimmt werden, zum Beispiel einem Tracer oder einem mechanischen Fassungsscheibenwinkelmesser.

Bevorzugt weist die Vorrichtung 1 neben der Gravurvisualisierung aber ein eigenes Messgerät für die Fassungs- scheibenwinkel $\alpha$ und $\beta$ der eingelegten Brille 10 auf. Hierzu kann eine Oberflächenvermessung der Brille 10 mittels Analyse einer Reflexion einer oder mehrerer Laserlinien durchgeführt werden. Hierfür kann das Ausrichtungsermittlungsmittel 5 vorgesehen sein, das insbesondere als ein Fassungsscheibenwinkelermittlungsmittel ausgebildet sein kann, und das z.B. einen Laserscanner aufweisen kann. Das Ausrichtungsermittlungsmittel 5 projiziert zumindest die eine Laserlinie 4 über die Oberfläche der Brille 10. Dies ist näher in Figur 2 gezeigt, bei der die Laserlinie 4 im Wesentlichen horizontal, also etwa parallel zur x-Richtung, über die Brille 10 projiziert wird. Hierbei ist die Laserlinie 4 bevorzugt versetzt zu den Funktionsgravuren 11 über die Oberfläche der Brille 10 projiziert. Dadurch wird in der Aufnahme die Detektion der Funktionsgravuren 11 nicht durch die Laserlinie 4 gestört.

Die Laserlinie 4 wird hierzu bevorzugt mit einem blauen Licht erzeugt, das besonders gut an der Oberfläche von Brillengläsern reflektiert wird, ohne wie z.B. UV-Licht eine Gefahr für eine Bedienperson bereitzustellen.

Aus dem genauen Verlauf der Laserlinie 4 im aufgenommenen Bild kann ein Oberflächenverlauf 20 ermittelt werden, der wie in Figur 3 ausgebildet im Wesentlichen entlang der Oberfläche der Brillengläser verläuft. Der Oberflächenverlauf 20 ergibt sich aus dem Oberflächenscan, der mittels des Ausrichtungsermittlungsmittels 5 durchgeführt und/oder ausgewertet werden kann. Die Reflexion der zumindest einen Laserlinie kann durch eine zusätzliche Aufnahmeeinrichtung detektiert werden, oder aber von der Bildaufnahmevorrichtung 2. Hierbei kann der genaue Verlauf der Laserlinie 4 ausgerichtet zur Bildaufnahmevorrichtung 2 angeordnet sein, so dass z.B. aufgrund vorbekannter und/oder ermittelter Positionen im aufgenommen Bild Rückschlüsse auf den Verlauf der Laserlinie 4 gemacht werden können. Weiterhin können anhand des Verlaufs der Laserlinie 4 die Positionen der Fassung und/oder der Brillenglasränder im Raum und/oder in Weltkoordinaten ermittelt und bestimmt werden. Mit anderen Worten ist der Verlauf der Laserlinie 4 zur Brille 10 und/oder den Brillengläsern ausgerichtet, und diese Ausrichtung ist der Verarbeitungsvorrichtung vorbekannt. Insbesondere bei vorbekannter Glasgeometrie kann die genaue Lage der Brillengläser im Raum bestimmt und/oder ermittelt werden.

Hierbei kann weiterhin eine Vorneigung der Brillenfassung bestimmt und bei der Überprüfung der Zentrierung berücksichtigt werden. Hierzu kann zumindest eine zweite Laserlinie auf die Brille 10 oder die Brillengläser projiziert werden, die zum Beispiel im Wesentlichen senkrecht zu der Laserlinie 4 ausgerichtet sein kann. Hierzu kann ebenfalls das Ausrichtungsermittlungsmittel 5 ausgebildet sein.. Insbesondere kann auf jedes der beiden Brillengläser zumindest eine im Wesentlichen parallel zur y-Achse ausgerichtete Laserlinie auf die Brillengläser projiziert werden, aus denen die Vorneigung berechnet werden kann. Auch diese Laserlinie zur Ermittlung der Vorneigung kann blau ausgebildet sein und versetzt zu allen Funktionsgravuren 11 auf die Brille 10 oder die Brillengläser projiziert werden.

Wie der in Figur 3 gezeigte Oberflächenverlauf 20 der Brille 10 zur Berechnung der Fassungsscheibenwinkel $\alpha$ und $\beta$ verwendet werden kann ist dem Fachmann bekannt und kann zum Beispiel den eingangs genannten Normen entnommen werden. Hierzu kann als ein Zwischenschritt zum Beispiel eine Fassungsebene F ermittelt werden, die ebenfalls in Figur 3 gezeigt ist. Die Fassungsscheibenwinkel $\alpha$ und $\beta$ können als Schnittwinkel mit der Fassungsebene F ermittelt werden, insbesondere aus geometrischen und strahlenoptischen Berechnungen.

Werden anstelle der Brille 10 lediglich formgerandete Gläser untersucht, so kann, wie bereits voranstehend erwähnt, eine Glasaufnahme 7 verwendet werden, die die Brillengläser näherungsweise unter einem Fassungsscheibenwinkel von etwa 0° im Aufnahmefeld der Bildaufnahmevorrichtung 2 anordnet. Deswegen kann in diesem Fall die Überprüfung der Zentrierung ohne Berücksichtigung des Fassungsscheibenwinkels und/oder der Vorneigung durchgeführt werden. Alternativ kann die genaue Ausrichtung der formgerandeten Brillengläser im Aufnahmefeld der Bildaufnahmevorrichtung 2 auch wie voranstehend beschrieben mit Hilfe zumindest einer Laserlinie 4 ermittelt werden, die von dem Ausrichtungsermittlungsmittel 5 auf die Brillengläser projiziert wird.

Aus den Fassungsscheibenwinkeln $\alpha$ und $\beta$ und/oder der Ausrichtung/Neigung der Brillengläser kann zum Beispiel mit Hilfe der zugehörigen Theoriedaten, wie zum Beispiel einer Glasdicke, einer Vorderfläche, einer Rückfläche, usw. über Strahldurchrechnung eine gegebenenfalls auftretende Parallaxenverschiebung bei Beobachtung der Funktionsgravuren 11 durch die Brillengläser hindurch berechnet werden. Durch Berücksichtigung der Parallaxenverschiebung können Abweichung der realen Positionen der Funktionsgravuren 11 von den in dem Bild ermittelten Positionen der Funktionsgravuren 11 genau bestimmt werden. Zur Überprüfung der Zentrierung kann somit die genaue Position der unterschiedlichen Funktionsgravuren 11 verwendet werden. Durch die Überprüfung der Zentrierung erfolgt eine Überprüfung der Fertigungsqualität und/oder der Einschleifqualität der fertigen Brille bzw. der formgerandeten Brillengläser.

Als Strukturerzeugungsmittel 6 kann auch eine bedruckte Folie verwendet werden, die zum Beispiel eigens beleuchtet sein kann.

Der Oberflächenverlauf 20, wie er in Figur 3 dargestellt ist, kann z.B. vollständig mit Hilfe eines wie beschriebenen Laserscans ermittelt werden. Alternativ können lediglich Teile des Oberflächenverlaufs 20 ermittelt werden, die bis zu den Fassungsrändern extrapoliert werden können. Aus den Endpunkten des Oberflächenverlaufs 20 können die Fassungsscheibenwinkel $\alpha$ und $\beta$ berechnet werden.

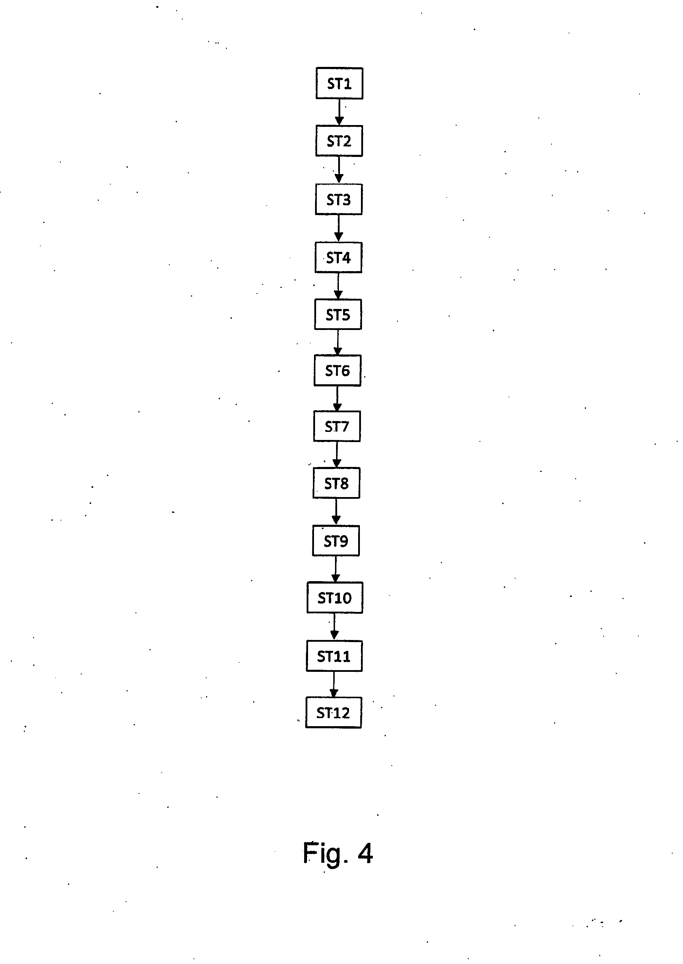

**Figur 4** zeigt in einem schematischen Ablaufdiagramm eine Ausführungsform eines Verfahrens zur Überprüfung der Zentrierung von einer fertigen Brille oder von formgerandeten Brillengläsern. Hierbei wird zunächst in einem Schritt ST1 das zu untersuchende Objekt (also die fertige Brille oder die formgerandeten Brillengläser) in der Glasaufnahme 7 angeordnet, vgl. auch Figur 1.

Anschließend oder bereits davor werden in einem Schritt ST2 theoretische Sollpositionen der Funktionsgravuren 11 berechnet, also Positionen, an denen die Funktionsgravuren 11 angeordnet sein sollten, falls die Brille 10 oder die Brillengläser richtig zentriert sind. Hierbei kann insbesondere ein Sollabstand zu einem nasalen und/oder temporalen Glasrand berechnet werden und ein Sollabstand zu einem unteren und/oder oberen Glasrand. Die Soll-Abstände können für alle vier Funktionsgravuren 11 berechnet werden (also zwei pro Brillenglas). Hierbei können die Soll-Abstände entweder zu einem tatsächlichen Brillenglasrand berechnet werden, oder zu dem Rand eines Rechtecks, das um das jeweilige Brillenglas gelegt ist, an dem die jeweilige Funktionsgravur angeordnet ist. Ein solches Rechteck, welches das Brillenglas umgibt, wird regelmäßig im Kastenmaß und/oder Kastensystem beim Beranden und/oder Einschleifen von Brillengläsern verwendet und ist dem Fachmann bekannt.

Ein nasaler Rand des umgebenden Rechtecks kann dadurch ermittelt werden, dass von der Fassungsmitte der halbe Abstand zwischen den Gläsern abgezogen wird, der auch als AzG abgekürzt wird. Hiermit ist die Stegweite der Brillenfassung gemeint.

Weiterhin kann in einem Schritt ST3 eine theoretische Sollverdrehung der Brillengläser berechnet werden, also eine Verdrehung unter der die Brillengläser im aufgenommenen Bild angeordnet sind. Die Sollverdrehung kann zum Beispiel einen theoretischen Soll-Fassungsscheibenwinkel und/oder eine theoretische Soll-Vorneigung beinhalten. Bei der Verdrehung kann sowohl eine Verdrehung der Brillengläser der gefertigten Brille als auch eine Verdrehung von formgerandeten Brillengläsern gemeint sein, die noch nicht in eine Brillenfassung eingesetzt sind. Die theoretische Sollverdrehurig kann eine Ausrichtung und/oder Neigung zur optischen Aufnahmeachse der Bildaufnahmevorrichtung 2 beinhalten.

Wie bereits voranstehend ausgeführt, wird in einem Schritt ST4 ein Bild der Brille 10 oder der Brillengläser aufgenommen, zum Beispiel von der Bildaufnahmevorrichtung 2, die in Figur 1 gezeigt ist. In dem Bild ist sowohl die Brille 10 oder die Brillengläser enthalten, sowie z.B. eine Struktur, die von dem Strukturerzeugungsmittel 6 bereitgestellt wird. Weiterhin kann das Bild Licht einer Beleuchtungsquelle enthalten, die zum Sichtbarmachen und/oder markieren der Funktionsgravuren 11 dient. Falls das Strukturerzeugungsmittel 6 als Bildschirm ausgebildet ist, können sowohl die Struktur als auch das Licht von dem Bildschirm bereitgestellt werden.

Im aufgenommenen Bild wird in einem Schritt ST5 eine Glaskontur der Brillengläser ermittelt, anhand der z.B. ein umgebendes Rechteck um die beiden Brillengläser zur weiteren Berechnung erstellt werden kann. Es kann auch lediglich zumindest einen Brillenbezugspunkt detektiert werden, anhand dessen die Ausrichtung, Neigung usw. der Brillenfassung im aufgenommenen Bild ermittelt werden kann.

Im aufgenommenen Bild wird in einem Schritt ST6 weiterhin die Position der Funktionsgravuren 11 ermittelt. Hierbei können pro Brillenglas zumindest die Positionen zweier Funktionsgravuren 11 ermittelt werden.

Im aufgenommenen Bild können die Positionen der Funktionsgravuren 11 zunächst erst in Pixelkoordinaten vorliegen. Gleiches gilt für die Glaskonturen der Brillengläser und/oder die Positionen der Brillenbezugspunkte. Die Pixelkoordinaten können in einem Schritt ST7 unter Kenntnis einer Kalibrierung in SI-Einheiten umgerechnet werden, zum Beispiel in Millimeter und/oder in Weltkoordinaten.

Anschließend können die Abstände der jeweiligen Funktionsgravuren mit Hilfe der - ermittelten Positionen berechnet werden. Hierbei können in einem Schritt ST8 sowohl die Abstände von einem nasalen und/oder temporalen Rand des umgebenden Rechtecks ermittelt werden als auch in einem Schritt ST9 die Abstände von einem unteren und/oder oberen Rand des umgebenden Rechtecks. Mit anderen Worten werden in den Schritten ST8 und ST9 Ist-Abstände berechnet, im Gegensatz zu den voranstehend im Schritt ST2 berechneten Soll-Abständen, die die Positionen der Funktionsgravuren aufweisen sollten, falls eine korrekte Zentrierung vorliegt.

Bei der Überprüfung der Zentrierung kann weiterhin in einem Schritt ST10 eine Ist-Verdrehung der Brillengläser berücksichtigt werden, insbesondere die Ist-Fassungsscheibenwinkel und/oder die Ist-Vorneigungen der Brillengläser. Alternativ oder zusätzlich kann eine Ist-Vertikalenneigung und/oder eine Ist-Horizontalneigung der Gläser berücksichtigt werden. Weiterhin kann bei der Berechnung der Ist-Abstände von den Soll-Abständen eine Parallaxenverschiebung berücksichtigt werden, die sich immer dann ergibt, wenn die Funktionsgravuren 11 auf der von der Bildaufnahmevorrichtung 2 abgewandten Seite der Brillengläser angeordnet sind.

Schließlich können in einem Schritt ST11 die Positionsabweichungen (IST - SOLL) der einzelnen Funktionsgravuren 11 berechnet werden, also insbesondere ein Abweichung der Ist-Position von der vorab theoretisch ermittelten Soll-Position der Funktionsgravuren.

Zur Überprüfung der Zentrierung kann in einem Schritt ST12 insbesondere eine Ist-Pupillendistanz (abgekürzt Ist-PD) und/oder eine Ist-Einschleifhöhe (abgekürzt Ist-ESH) mit der jeweils zugehörigen Soll-Pupillendistanz (abgekürzt Soll-PD) und/oder einer theoretisch ermittelten Soll-Einschleifhöhe (abgekürzt Soll-ESH) verglichen werden. So kann berechnet werden, wie sehr die Ist-PD von der Soll-PD abweicht und/oder wie sehr die Ist-ESH von der Soll-ESH abweicht, z.B. mittels der Gleichungen:

$$\text{IST-PD} = \text{SOLL-PD} + (\text{horizontale Abweichung der nasalen Gravur} + \text{horizontale Abweichung der temporalen Gravur})/2;$$

und

$$\text{IST-ESH} = \text{SOLL-ESH} + (\text{vertikale Abweichung der nasalen Gravur} + \text{vertikale Abweichung der temporalen Gravur})/2.$$

Bei der Berechnung wird zwischen der Position der nasalen Gravur und der Position der temporalen Gravur unterschieden. Die nasale Gravur ist hierbei diejenige Funktionsgravur des jeweiligen Brillenglases, die in Gebrauchsstellung näher an der Nase des Benutzers angeordnet ist, während die temporale Gravur diejenige Funktionsgravur des jeweiligen Brillenglases ist, die in Gebrauchsstellung weiter von der Nase des Benutzers beabstandet ist.

Ist die ermittelte Abweichung geringer als eine zulässige und/oder erlaubbare Abweichung, so kann das Ergebnis der Überprüfung sein, dass eine hinreichend gute Zentrierung vorliegt. Weicht zumindest einer der beiden Ist-Werte von den theoretisch ermittelten Soll-Werten stärker ab als eine zulässige Toleranz erlaubt, so kann die Überprüfung der Zentrierung negativ ausfallen. Abhängig vom Ergebnis der Überprüfung kann eine Ausgabe erfolgen, die einer Bedienperson anzeigt, welches Ergebnis die Überprüfung ergeben hat.

Optional kann zusätzlich eine Verdrehung des jeweiligen Brillenglases innerhalb der Fassung überprüft werden. Hierbei kann die Verdrehung aus der Ist-Position der Funktionsgravuren berechnet und/oder gemessen werden. Die Überprüfung der Verdrehung des bzw. der Brillengläser kann in das Ergebnis der Überprüfung der Zentrierung einfließen.

Das in Figur 4 gezeigte Ausführungsbeispiel ist beispielhaft zu verstehen. Anstelle der Pupillendistanz und der Einschleifhöhe könnte auch eine Abweichung von einer absoluten Sollposition überprüft werden, zum Beispiel im zweidimensionalen Kastenmaß oder in dreidimensionalen Weltkoordinaten.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel.

**Bezugszeichenliste**

| 1 | Vorrichtung |
|---|---|
| 2 | Bildaufnahmevorrichtung |
| 3 | Objektiv |
| 4 | Laserlinie |
| 5 | Ausrichtungsermittlungsmittel |
| 6 | Strukturerzeugungsmittel |
| 7 | Glasaufnahme |
| 10 | . Brille |
| 11 | Funktionsgravur |
| 20 | Oberflächenverlauf |
| F | Fassungsebene |
| α | rechter Fassungsscheibenwinkel |
| β | linker Fassungsscheibenwinkel |

**Patentansprüche**

1.  Verfahren zur Überprüfung der Zentrierung zumindest eines Brillenglases mit den Schritten:

    - Anordnen des zumindest einen Brillenglases in einem Aufnahmefeld einer Bildaufnahmevorrichtung (2);
    - Aufnehmen zumindest eines Bildes des Brillenglases mittels der Bildaufnahmevorrichtung (2);
    - Ermitteln von Positionen von Funktionsgravuren (11) des Brillenglases im aufgenommenen Bild;
    - Ermitteln zumindest einer Glaskontur des Brillenglases im aufgenommenen Bild; und
    - Überprüfen der Zentrierung des Brillenglases unter Berücksichtigung:

        - der ermittelten Position der Funktionsgravuren (11),
        - der ermittelten Glaskontur,
        - zumindest eines Fassungsscheibenwinkels (α, β) des Brillenglases,
        - einer vorbekannten, nutzerabhängigen Sollgeometrie der Zentrierung und
        - einer Parallaxenverschiebung, falls die Funktionsgravuren (11) auf der Seite des Brillenglases angeordnet sind, die der Bildaufnahmevorrichtung (2) beim Aufnehmen des Bildes abgewandt ist, wobei die Parallaxenverschiebung aus dem Fassungsscheibenwinkel (α, β) und zugehörigen Theoriedaten wie einer Glasdicke, einer Vorderfläche und einer Rückfläche des zumindest einen Brillenglases über Strahldurchrechnung durch das Brillenglas hindurch berechnet wird.

2.  Verfahren nach Anspruch 1, wobei

    - das Brillenglas entweder in einer fertigen Brille (10) oder als zumindest ein formgerandetes Brillenglas bereitgestellt wird,
    - die Glaskontur des Brillenglases im aufgenommenen Bild entweder

        - durch Ermitteln der Position zumindest eines Brillenbezugspunkts der fertigen Brille (10) im aufgenommenen Bild ermittelt wird oder
        - durch Ermitteln einer Glasform des formgerandeten Brillenglases im aufgenommenen Bild ermittelt wird; und

    - die Zentrierung der fertigen Brille (10) oder des formgerandeten Brillenglases unter Berücksichtigung der ermittelten Position des Brillenbezugspunkts oder der ermittelten Glasform überprüft wird.

3.  Verfahren nach einem der vorangegangenen Ansprüche, wobei zur Ermittlung der Position der Funktionsgravuren (11) auf einer der Bildaufnahmevorrichtung (2) abgewandten Seite des Brillenglases eine Struktur erzeugt wird, die zumindest teilweise im aufgenommenen Bild durch das Brillenglas hindurch abgebildet wird.

4.  Verfahren nach einem der vorangegangenen Ansprüche, wobei der Fassungsscheibenwinkel (α, β) mittels Auswertung einer Reflektion zumindest einer Laserlinie (4) an dem Brillenglas ermittelt wird.

5.  Verfahren nach Anspruch 4, wobei als Laserlinie (4) Laserlicht einer Wellenlänge von etwa 400 nm bis etwa 500 nm verwendet wird.

6.  Verfahren nach einem der vorangegangenen Ansprüche, wobei der Fassungsscheibenwinkel ($\alpha$, $\beta$) aus Fertigungs-daten einer Brillenfassung für das Brillenglas ermittelt wird und/oder mittels eines externen Messgeräts.

7.  Verfahren nach einem der vorangegangenen Ansprüche, wobei für den Fall, dass die Zentrierung an zumindest einem formgerandeten Brillenglas überprüft wird, das formgerandete Brillenglas unter einem Fassungsscheiben-winkel ($\alpha$, $\beta$) von etwa 0° im Aufnahmefeld der Bildaufnahmevorrichtung (2) angeordnet wird, wobei beim Überprüfen der Zentrierung der Fassungsscheibenwinkel ($\alpha$, $\beta$) unberücksichtigt bleibt.

8.  Verfahren nach einem der vorangegangenen Ansprüche, wobei eine Vorneigung des Brillenglases ermittelt wird und die ermittelte Vorneigung beim Überprüfen der Zentrierung des Brillenglases berücksichtigt wird.

9.  Vorrichtung (1) zur Überprüfung der Zentrierung zumindest eines Brillenglases mit:

    - einer Glasaufnahme (7) zur Aufnahme des zumindest einen Brillenglases;
    - einer Bildaufnahmevorrichtung (2) zum Aufnehmen eines Bildes des in der Glasaufnahme (7) angeordneten Brillenglases;
    - einem Gravurenermittlungsmittel zum Ermitteln von Positionen von Funktionsgravuren (11) des Brillenglases im aufgenommenen Bild;
    - einem Geometrieermittlungsmittel zum Ermitteln zumindest einer Glaskontur des zumindest einen Brillenglases im aufgenommenen Bild; und
    - einem Überprüfungsmittel zum Überprüfen der Zentrierung des zumindest einen Brillenglases unter Berücksichtigung:

        - der ermittelten Position der Funktionsgravuren (11),
        - der ermittelten Glaskontur,
        - zumindest eines Fassungsscheibenwinkels ($\alpha$, $\beta$) des Brillenglases,
        - einer vorbekannten, nutzerabhängigen Sollgeometrie der Zentrierung und
        - einer Parallaxenverschiebung, falls die Funktionsgravuren (11) auf der Seite des Brillenglases angeordnet sind, die der Bildaufnahmevorrichtung (2) beim Aufnehmen des Bildes abgewandt ist, wobei die Parallaxen-verschiebung aus dem Fassungsscheibenwinkel ($\alpha$, $\beta$) und zugehörigen Theoriedaten wie einer Glasdicke, einer Vorderfläche und einer Rückfläche des zumindest einen Brillenglases über Strahldurchrechnung durch das Brillenglas hindurch berechnet wird.

10. Vorrichtung (1) nach Anspruch 9 mit einem Ausrichtungsermittlungsmittel zum Ermitteln einer Ausrichtung des Brillenglases relativ zu einer optischen Aufnahmeachse der Bildaufnahmevorrichtung (2), wobei das Überprüfungsmittel dazu ausgelegt ist, die ermittelte Ausrichtung beim Überprüfen der Zentrierung des Brillenglases zu berücksichtigen.

11. Vorrichtung (1) nach einem der Ansprüche 9 oder 10, wobei die Bildaufnahmevorrichtung (2) ein telezentrisches Objektiv (3) aufweist.

12. Vorrichtung (1) nach einem der Ansprüche 9 bis 11, mit einem Strukturerzeugungsmittel (6) zum Erzeugen einer Struktur auf der der Bildaufnahmevorrichtung (2) abgewandten Seite des Brillenglases, wobei die Struktur im aufgenommenen Bild durch das Brillenglas hindurch abbildbar ist; und/oder wobei die Glasaufnahme (7) im Wesentlichen transparent ausgebildet ist und/oder die Glasaufnahme (7) das zumindest eine Brillenglas an einem bezüglich einer optischen Aufnahmeachse der Bildaufnahmevorrichtung (2) lateralen Bereich aufnimmt.

13. Computerprogrammprodukt welches Programmteile enthält, welche, wenn sie auf einem Prozessor ausgeführt werden, in einem Verfahren gemäß einem der Ansprüche 1 bis 8 die Positionen der Funktionsgravuren (11) ermitteln, die Glaskontur des zumindest einen Brillenglases ermitteln und die Zentrierung des zumindest einen Brillenglases überprüfen.

**Claims**

1.  Method for checking the centring of at least one spectacle lens comprising the steps of:

- arranging the at least one spectacle lens in a recording field of an image recording device (2);
- recording at least one image of the spectacle lens by means of the image recording device (2);
- determining the positions of functional engravings (11) of the spectacle lens in the recorded image;
- determining at least one lens contour of the spectacle lens in the recorded image; and
- checking the centring of the spectacle lens, taking into account

- the determined position of the functional engravings (11),
- the determined lens contour,
- at least one lens angle ($\alpha, \beta$) of the spectacle lens,
- a previously known, user-dependent target geometry of the centring and
- a parallax shift, if the functional engravings (11) are arranged on the side of the spectacle lens which faces away from the image pick-up device (2) when the image is picked up, the parallax shift being calculated from the frame lens angle ($\alpha, \beta$) and associated theoretical data such as a lens thickness, a front surface and a rear surface of the at least one spectacle lens via ray calculation through the spectacle lens.

2. The method according to claim 1, wherein

- the spectacle lens is provided either in a finished spectacle (10) or as at least one moulded spectacle lens,
- the glass contour of the spectacle lens in the recorded image is either

- is determined by determining the position of at least one spectacle reference point of the finished spectacles (10) in the recorded image, or
- by determining a lens shape of the mould-edged spectacle lens in the recorded image; and

- the centring of the finished spectacles (10) or of the shape-edged spectacle lens is checked, taking into account the determined position of the spectacle reference point or the determined lens shape.

3. The method according to one of the preceding claims, wherein to determine the position of the functional engravings (11) on a side of the spectacle lens facing away from the image recording device (2), a structure is generated which is at least partially imaged through the spectacle lens in the recorded image.

4. The method according to one of the preceding claims, wherein the frame lens angle ($\alpha, \beta$) is determined by evaluating a reflection of at least one laser line (4) on the spectacle lens.

5. The method according to claim 4, wherein laser light of a wavelength of about 400 nm to about 500 nm is used as the laser line (4).

6. The method according to one of the preceding claims, wherein the frame lens angle ($\alpha, \beta$) is determined from manufacturing data of a spectacle frame for the spectacle lens and/or by means of an external measuring device.

7. The method according to one of the preceding claims, wherein, in the event that the centring is checked on at least one shape-edged spectacle lens, the shape-edged spectacle lens is arranged at a frame lens angle ($\alpha, \beta$) of approximately 0° in the recording field of the image recording device (2), wherein the frame lens angle ($\alpha, \beta$) is not taken into account when checking the centring.

8. The method according to one of the preceding claims, wherein a pre-tilt of the spectacle lens is determined and the determined pre-tilt is taken into account when checking the centring of the spectacle lens.

9. A device (1) for checking the centring of at least one spectacle lens, comprising:

- a lens holder (7) for holding the at least one spectacle lens;
- an image recording device (2) for recording an image of the spectacle lens arranged in the glass holder (7);
- an engraving detection means for detecting positions of functional engravings (11) of the spectacle lens in the recorded image;
- a geometry determining means for determining at least one glass contour of the at least one spectacle lens in the recorded image; and
- a checking means for checking the centring of the at least one spectacle lens, taking into account

- the determined position of the functional engravings (11),
- the determined lens contour,
- at least one lens angle ($\alpha$, $\beta$) of the spectacle lens,
- a previously known, user-dependent target geometry of the centring and
- a parallax shift if the functional engravings (11) are arranged on the side of the spectacle lens which faces away from the image pick-up device (2) when the image is picked up, the parallax shift being calculated from the frame lens angle ($\alpha\beta$) and associated theoretical data such as a lens thickness, a front surface and a rear surface of the at least one spectacle lens by means of ray calculation through the spectacle lens.

10. The device (1) according to claim 9, comprising alignment determining means for determining an alignment of the spectacle lens relative to an optical pick-up axis of the image pick-up device (2), wherein the checking means is adapted to take the determined alignment into account when checking the centring of the spectacle lens.

11. The device (1) according to any one of claims 9 or 10, wherein the image pick-up device (2) comprises a telecentric lens (3).

12. The device (1) according to any one of claims 9 to 11, comprising a structure generating means (6) for generating a structure on the side of the spectacle lens facing away from the image recording device (2), wherein the structure can be imaged through the spectacle lens in the recorded image;
and/or
wherein the glass holder (7) is substantially transparent and/or the glass holder (7) accommodates the at least one spectacle lens at a lateral region with respect to an optical pick-up axis of the image pick-up device (2).

13. Computer program product which contains program parts which, when executed on a processor, determine the positions of the functional engravings (11) in a method according to any one of claims 1 to 8, determine the glass contour of the at least one spectacle lens and check the centring of the at least one spectacle lens.

## Revendications

1. Procédé de vérification du centrage d'au moins un verre de lunettes comprenant les étapes suivantes:

   - Disposer ledit au moins un verre de lunettes dans un champ de prise de vue d'un dispositif de prise de vue (2);
   - Prise d'au moins une image du verre de lunettes au moyen du dispositif de prise de vue (2);
   - Détermination des positions des gravures fonctionnelles (11) du verre de lunettes dans l'image enregistrée ;
   - détermination d'au moins un contour de verre du verre de lunettes dans l'image enregistrée ; et
   - vérifier le centrage du verre de lunettes en tenant compte :

      - de la position déterminée des gravures fonctionnelles (11),
      - du contour du verre déterminé,
      - d'au moins un angle de verre de monture ($\alpha$, $\beta$) du verre de lunettes,
      - d'une géométrie de consigne du centrage connue à l'avance et dépendant de l'utilisateur et
      - d'un décalage de parallaxe, dans le cas où les gravures fonctionnelles (11) sont disposées sur le côté du verre de lunettes qui est opposé au dispositif de prise de vue (2) lors de la prise de vue de l'image, le décalage de parallaxe étant calculé à partir de l'angle du verre de monture ($\alpha$, $\beta$) et de données théoriques associées, telles qu'une épaisseur de verre, une surface avant et une surface arrière d'au moins un verre de lunettes, par un calcul de transmission de faisceau à travers le verre de lunettes.

2. Procédé selon la revendication 1, dans lequel

   - le verre de lunettes est fourni soit sous forme de lunettes finies (10), soit sous forme d'au moins un verre de lunettes à bords moulés,
   - le contour du verre de lunettes dans l'image enregistrée soit

      - soit en déterminant la position d'au moins un point de référence des lunettes finies (10) dans l'image enregistrée
      - en déterminant une forme de verre du verre de lunettes à bords moulés dans l'image enregistrée ; et

- le centrage des lunettes finies (10) ou du verre de lunettes à bords moulés est contrôlé en tenant compte de la position déterminée du point de référence des lunettes ou de la forme du verre déterminée.

3. Procédé selon l'une des revendications précédentes, dans lequel, pour déterminer la position des gravures fonctionnelles (11) sur un côté du verre de lunettes opposé au dispositif de prise de vue (2), on génère une structure qui est reproduite au moins partiellement à travers le verre de lunettes dans l'image prise.

4. Procédé selon l'une des revendications précédentes, dans lequel l'angle de la monture ($\alpha$, $\beta$) est déterminé au moyen de l'évaluation d'une réflexion d'au moins une ligne laser (4) sur le verre de lunettes.

5. Procédé selon la revendication 4, dans lequel on utilise comme ligne laser (4) une lumière laser d'une longueur d'onde d'environ 400 nm à environ 500 nm.

6. Procédé selon l'une des revendications précédentes, dans lequel l'angle de la monture ($\alpha$, $\beta$) est déterminé à partir des données de fabrication d'une monture de lunettes pour le verre de lunettes et/ou au moyen d'un appareil de mesure externe.

7. Procédé selon l'une des revendications précédentes, dans lequel, dans le cas où le centrage est vérifié sur au moins un verre de lunettes à bord façonné, le verre de lunettes à bord façonné est disposé sous un angle de verre de monture ($\alpha$, $\beta$) d'environ 0° dans le champ de prise de vue du dispositif de prise d'image (2), l'angle de verre de monture ($\alpha$, $\beta$) n'étant pas pris en compte lors de la vérification du centrage.

8. Procédé selon l'une des revendications précédentes, dans lequel une pré-inclinaison du verre de lunettes est déterminée et la pré-inclinaison déterminée est prise en compte lors du contrôle du centrage du verre de lunettes.

9. Dispositif (1) de contrôle du centrage d'au moins un verre de lunettes comprenant :

- un logement de verre (7) pour recevoir le au moins un verre de lunettes;
- un dispositif de prise de vue (2) pour prendre une image du verre de lunettes disposé dans le logement de verre (7);
- un moyen de détermination des gravures pour déterminer les positions des gravures fonctionnelles (11) du verre de lunettes dans l'image enregistrée ;
- un moyen de détermination de la géométrie pour déterminer au moins un contour de verre de l'au moins un verre de lunettes dans l'image enregistrée ; et
- un moyen de contrôle pour contrôler le centrage de l'au moins un verre de lunettes en tenant compte :

  - de la position déterminée des gravures fonctionnelles (11),
  - du contour déterminé du verre,
  - d'au moins un angle de verre de monture ($\alpha$, $\beta$) du verre de lunettes,
  - d'une géométrie de consigne du centrage connue à l'avance et dépendante de l'utilisateur et
  - d'un décalage de parallaxe, dans le cas où les gravures fonctionnelles (11) sont disposées sur le côté du verre de lunettes qui est opposé au dispositif de prise de vue (2) lors de la prise de vue de l'image, le décalage de parallaxe étant calculé à partir de l'angle du verre de monture ($\alpha$, $\beta$) et de données théoriques associées telles qu'une épaisseur de verre, une surface avant et une surface arrière de l'au moins un verre de lunettes par calcul de rayon à travers le verre de lunettes.

10. Dispositif (1) selon la revendication 9, comprenant des moyens de détermination d'orientation pour déterminer une orientation du verre de lunettes par rapport à un axe optique de prise de vue du dispositif de prise de vue (2), les moyens de vérification étant adaptés pour prendre en compte l'orientation déterminée lors de la vérification du centrage du verre de lunettes.

11. Dispositif (1) selon l'une des revendications 9 ou 10, dans lequel le dispositif de prise de vue (2) comprend un objectif télécentrique (3).

12. Dispositif (1) selon l'une des revendications 9 à 11, comprenant un moyen de génération de structure (6) pour générer une structure sur la face du verre de lunettes opposée au dispositif de prise de vue (2), la structure pouvant être reproduite à travers le verre de lunettes dans l'image enregistrée ;
et/ou

le logement de verre (7) étant réalisé essentiellement transparent et/ou le logement de verre (7) recevant le au moins un verre de lunettes dans une zone latérale par rapport à un axe optique de prise de vue du dispositif de prise de vue (2).

13. Produit de programme informatique qui contient des parties de programme qui, lorsqu'elles sont exécutées sur un processeur, déterminent les positions des gravures fonctionnelles (11), déterminent le contour du verre de l'au moins un verre de lunettes et vérifient le centrage de l'au moins un verre de lunettes dans un procédé selon l'une des revendications 1 à 8.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008039416 A1
- DE 102014005281 A1
- DE 10333426 A1